# EUROPÄISCHE PATENTSCHRIFT

(11) **EP 1 389 690 B1**
(45) Veröffentlichungstag und Bekanntmachung des Hinweises auf die Patenterteilung: **03.01.2007**
(21) Anmeldenummer: 02018492.5
(22) Anmeldetag: 16.08.2002
(51) Int. Cl.: F16B 35/04, F16B 35/06

(54) **Innenkühlbare Schraube**
Screw interiorly cooled
Vis intérieurement refroidissable

(43) Veröffentlichungstag der Anmeldung: 18.02.2004
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 0 021 161
- US-A- 3 408 812
- US-A- 3 943 703
- US-A- 6 047 552

## Beschreibung

Die Erfindung betrifft eine durch ein strömendes Kühlmittel innenkühlbare Schraube (US 3 943 703).

Mechanisch und thermisch hoch belastete Schrauben werden beispielsweise im Gasturbinenbau eingesetzt. Ein Anwendungsbeispiel ist die Befestigung einer Brennkammerinnenverkleidung an einer Wandung einer Brennkammer. Üblicherweise wird versucht, eine Gasturbine mit einer möglichst hohen Temperatur in der Brennkammer zu betreiben, um einen hohen Wirkungsgrad zu erreichen. Typischerweise werden am Austritt der Brennkammer Gastemperaturen von 1200°C bis 1300°C erreicht. Häufig ist die Brennkammerinnenverkleidung mit von innen, d.h. von der Brennkammer, eingesetzten Schrauben an der Brennkammerwandung befestigt. Der Kopf der Schrauben ist damit direkt dem Brenngas in der Brennkammer ausgesetzt. Gelangt durch ein Versagen der Schraube diese oder ein Teil dieser, insbesondere der Schraubenkopf, in die Brennkammer und wird mit dem Gasstrom mitgerissen, so sind gravierende Schäden in der nachgeschalteten Turbine die Folge.

Um ein Versagen der in der Brennkammer angeordneten Befestigungsschrauben zuverlässig zu verhindern, können diese kühlbar ausgebildet sein. Hierzu weist die Befestigungsschraube beispielsweise eine axiale Bohrung auf, durch die ein Kühlfluid, insbesondere Kühlluft, von der Außenseite der Brennkammer in diese eingeleitet wird. Das Kühlfluid vermischt sich in der Brennkammer mit den Brenngasen. Hierdurch wird in nicht gewollter Weise die Temperatur in der Brennkammer reduziert. Der damit verbundene Wirkungsgradverlust wird in Kauf genommen, um durch die Kühlung eine ausreichende Festigkeit der Befestigungsschrauben zu gewährleisten. Die Sicherstellung einer ausreichenden mechanischen Belastbarkeit der Befestigungsschrauben bedingt jedoch einen erheblichen Kühlmittelbedarf.

Der Erfindung liegt die Aufgabe zugrunde, eine durch ein strömendes Kühlmittel innenkühlbare Schraube anzugeben, die sich durch einen besonders geringen Kühlmittelbedarf auszeichnet.

Diese Aufgabe wird erfindungsgemäß gelöst durch eine Schraube mit den Merkmalen des Anspruches 1. Hierbei weist eine Schraube mit einem Kopf und einem Schaft einen Kühlmittelkanal mit einer Einströmöffnung sowie einer Ausströmöffnung auf, wobei der Kühlmittelkanal nicht die gesamte Schraube axial durchdringt. Die Schraube weist eine so genannte geschlossene Kühlung auf. Es ist ausgeschlossen, dass an beiden Stirnseiten der Schraube, d.h. sowohl an der Stirnseite des Schaftes als auch an der Deckfläche des Kopfes, jeweils ein Kühlmittelein- oder auslass angeordnet ist. Mindestens ein Kühlmittelein- oder auslass ist seitlich, d.h. zwischen der Deckfläche des Kopfes und der Stirnseite des Schaftes, angeordnet. Insbesondere in Fällen, in denen ein ausschließlich axialer Kühlmittelein- oder austritt nicht möglich oder verfahrenstechnisch nicht gewünscht ist, kann daher - im Fall eines seitlichen Kühlmitteleinlasses - eine radial auf die Längsachse der Schraube zu gerichtete Kühlmittelströmung erzeugt werden. Durch diese radiale Kühlmittelströmung wird die Schraube durch das selbe Kühlmittel, das diese von innen kühlt, auch von außen gekühlt. Dadurch ist ein besonders efektiver Kühlmitteleinsatz, d.h. eine sehr effektive Nutzung der Wärmekapazität des Kühlmittels, und damit eine besonders sparsame Kühlmittelverwendung ermöglicht. Der Temperaturunterschied zwischen dem Kühlmittel und der zu kühlenden Schraube wird zu einem besonders hohen Grad genutzt.

Nach einer bevorzugten Ausgestaltung ist der Kühlmittelauslass derart seitlich an der Schraube angeordnet, dass das aus der Schraube ausströmende Kühlmittel in axialer Richtung am Schaft entlang strömt. Hierdurch ist zusätzlich zur Innenkühlung der Schraube auch eine besonders wirksame Kühlung der Außenoberfläche der Schraube gewährleistet. Um den Schaft auf dessen gesamter Länge nicht nur von innen, sondern auch von außen zu kühlen, ist die Kühlmittelaustrittsöffnung vorteilhafterweise in möglichst unmittelbarer Nähe des Kopfes oder am Kopf selbst oder im Übergangsbereich zwischen Kopf und Schaft angeordnet, wobei das Kühlmittel axial in Richtung zur Stirnseite des Schaftes hin aus der Kühlmittelaustrittsöffnung ausströmt. Die Kühlmitteleintrittsöffnung befindet sich dagegen bevorzugt an der Stirnseite des Schaftes, d.h. am Schaftende. Die Kühlmitteleinströmrichtung ist damit der Kühlmittelausströmrichtung entgegengerichtet.

Um den gesamten Umfang des Schaftes möglichst gleichmäßig von außen zu kühlen, sind vorzgsweise mehrere Austrittsöffnungen, bevorzugt zumindest annähernd rotationssymmetrisch um die Achse der Schraube verteilt, am Schaftumfang und/oder am Kopf angeordnet. Die gleichmäßig verteilten Austrittsöffnungen haben zudem den Vorteil, dass eine unsymmetrische Schwächung des Querschnitts der Schraube und damit eine unnötige Minderung der mechanischen Belastungsfähigkeit vermieden ist. Die Kühlmittelaustrittsöffnung bzw. öffnungen ist bzw. sind bevorzugt in einem als verdickter Bereich des Schaftes diesen zum Kopf hin abgrenzenden Schraubenkragen angeordnet. Durch die Anordnung der Kühlmittelaustrittsöffnungen im Schraubenkragen ist eine Schwächung des Querschnitts des Schaftes aufgrund der Kühlmittelaustrittsöffnungen vermieden. Des Weiteren kann der Schraubenkragen dazu dienen, die Strömungsrichtung des Kühlmittels umzulenken.

Nach einer bevorzugten Ausgestaltung ist der Kopf der Schraube innengekühlt, wobei vorzugsweise eine Umlenkung der Strömungsrichtung des Kühlmittels im Kopf erfolgt, d.h. dieser einen sogenannten Umlenkbereich aufweist. Eine Kühlmitteleintritts- oder Austrittsöffnung ist an der Deck- oder Strinfläche des Kopfes vorzugsweise nicht vorgesehen. Hierdurch werden Prozesse, beispielsweise chemische Reaktionen, die in dem an die Stirnfläche des Kopfes grenzenden Raum ablaufen, nicht durch in diesen Raum einströmendes oder aus diesem Raum abströmendes Kühlmittel oder sonstiges Fluid beeinflusst. Dagegen wird vorteilhafterweise das seitlich im Bereich des Schaftes, des Kopfes und/oder des Schraubenkragens aus der Schraube ausströmende Kühlmittel gezielt weitergeleitet und/oder in einem geschlossenen Kühlmittelkreislauf geführt. Dabei ist eine axial im Schaftende angeordnete Kühlmitteleintrittsöffnung besonders gut für eine gezielte Kühlmittelzuführung bzw. -rückführung geeignet. Das Kühlmittel kann hierbei ohne Umlenkung und damit praktisch ohne Druckverlust in den zunächst axial im Schaft verlaufenden Kühlmittelkanal einströmen. Des Weiteren ist auf einfache Weise eine Zuleitung an die am Schaftende angeordnete Kühlmitteleintrittsöffnung anschließbar, beispielsweise anschraubbar.

Eine gezielte Kühlung des Kopfes ist bei hoher thermischer Beanspruchung für die Sicherheit der Schraubverbindung von besonderer Bedeutung. Dabei sollte der gesamte Kopf möglichst gleichmäßig gekühlt werden. Dies ist vorzugsweise dadurch erreicht, dass das durch den Schaft in die Schraube einströmende Kühlmittel mindestens bis zum Schraubenkragen, insbesondere bis zum Kopf, geradeaus strömt und erst im Kopf umgelenkt wird, wobei das Kühlmittel im Umlenkbereich in mehrere Kühlmittelteilströme aufgespaltet wird. Die einzelnen Teilkanäle sind dabei im Kopf der Schraube, gegebenfalls auch im Schraubenkragen, zumindest annähernd gleichmäßig, insbesondere rotationssymmetrisch, verteilt.

Die geschlossen innengekühlte Schraube ist besonders geeignet zur Befestigung einer Brennkammerinnenverkleidung an einer Brennkammerwand einer Gasturbine.

Die Vorteile der Erfindung liegen insbesondere darin, dass durch die Vermeidung eines axial durch die gesamte Schraube hindurch gehenden Kühlmittelstroms zum einen eine besonders effektive Nutzung des Kühlmittels, insbesondere durch auch an der Außenoberfläche der Schraube strömendes Kühlmittel, erreichbar ist. Zum anderen ist hierduch eine nicht gewollte axiale Einströmung und/oder Ausströmung von Kühlmittel in die bzw. aus der Schraube vermieden, wodurch eine nicht beabsichtigte direkte Einwirkung von Kühlmittel auf einen axial der Schraube angeordneten Raum ausgeschlossen ist.

Nachfolgend wird ein Ausführungsbeispiel der Erfindung anhand einer Zeichnung näher erläutert. Hierin zeigen:
- FIG 1a,b: eine innenkühlbare Schraube sowie im Detail ausschnittsweise einen Kühlmittelkanal der innenkühlbaren Schraube,
- FIG 2: die innenkühlbare Schraube nach FIG 1 mit einer zugehörigen Buchse,
- FIG 3: eine Gasturbine mit einer Gasturbinenbrennkammer mit einer Schraube nach FIG 1 und 2.

Einander entsprechende Teile sind in allen Figuren mit den gleichen Bezugszeichen versehen.

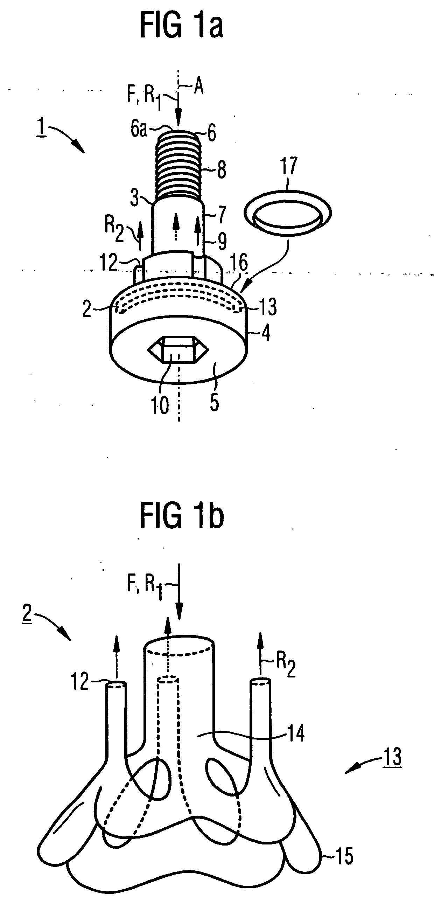

FIG 1a zeigt eine innenkühlbare Schraube 1, deren Kühlmittelkanal oder Kühlkanal 2 ausschnittsweise in FIG 1b dargestellt ist. Die Schraube 1 weist einen Schaft 3 und einen Kopf 4 auf und erstreckt sich längs einer Achse oder Symmetrieachse A von einer in der Darstellung unten liegenden Deckfläche 5 des Kopfes 4 bis zu einem Schaftende 6. Der Schaft 3, mit einem Schaftumfang 7, weist ein Gewinde 8 sowie einen den Schaft 3 zum Kopf 4 hin begrenzenden, verdickt ausgebildeten Schraubenkragen 9 auf. Der Kopf 4 weist an dessen Deckfläche 5 eine sechseckige Betätigungsöffnung 10 für einen Innensechskantschlüssel auf.

Ein Kühlmittel oder Kühlfluid F strömt am Schaftende 6 axial in Einströmrichtung R1 in eine Einströmöffnung 6a der Schraube 1 ein und tritt aus dieser in entgegen zur Einströmrichtung R1 gerichteter Ausströmrichtung R2 an drei Kühlmittelausströmöffnungen oder Ausströmöffnungen 12 aus. Der Kühlkanal 2 verläuft zunächst koaxial im Schaft 3 und nimmt im Kopf 4 den in FIG 1a strichpunktiert angedeuteten und in FIG 1b detailliert dargestellten Verlauf ein. Der Kühlkanal 2 weitet sich dicht oberhalb der Betätigungsöffnung 10 auf, wodurch in diesem Bereich ein Prallkühleffekt erzeugt wird. Der Bereich des Kühlkanals 2 im Kopf 4 wird als Umlenkbereich 13 bezeichnet. Nach der Aufweitung des Kühlkanals 2 teilt sich dieser in drei gekrümmte Teilkanäle 14 auf. Die Teilkanäle oder Verzweigungen 14 weisen einen gleichmäßigen Querschnitt auf und verlaufen innerhalb des Kopfes 4 bis nahe an die Deckfläche 5. Dort verzweigen sich die Teilkanäle 14 weich geblendet in die doppelte Anzahl von Feinkanälen 15. Die sechs Feinkanäle 15 verlaufen nahe der Oberfläche des Kopfes 4, bevor sie weich nach innen, d.h. in Richtung zur Achse A hin, geblendet werden und jeweils zwei Feinkanäle 15 zu einem Teilkanal 14 zusammengeführt werden. Über die somit in der Nähe des Schaftes 3 zusammengefassten drei Teilkanäle 14 strömt das Kühlmittel F durch die rotationssymmetrisch im Schraubenkragen 9 angeordneten Ausströmöffnungen 12 aus der Schraube 1 aus. Der Kopf 4 der Schraube 1 ist damit intensiv gekühlt, ohne dass Kühlmittel F in Richtung der Deckfläche 5 ausströmt. Auf die Innenseite 16 des Kopfes 4 ist ein Dichtring 17 aufsetzbar. Die Ausströmöffnungen 12 sind radial nach außen, d.h. zum auf den Schraubenkragen 9 aufgesetzten Dichtring 17 hin, offen.

Die Schraube 1 ist aus einem Gußmaterial hergestellt. Die Form des Kühlkanals 2 ist derart gewählt, dass die Schraube 1 einschließlich des gesamten Kühlkanals 2 in einem Gießverfahren herstellbar ist. Weitere, insbesondere spanabhebende Bearbeitungsschritte, wie Bohren, sind zur Herstellung des Kühlkanals 2 einschließlich der Teilkanäle 14 und der Feinkanäle 15 nicht erforderlich. Das Gießverfahren arbeitet ohne die Verwendung sogenannter "verlorener Einsätze". Hierzu ist die Schraube 1 mit dem Kühlkanal 2 derart geformt, dass unter Vermeidung einer Hinterschneidung das Gießverfahren unter Nutzung mehrerer Maskenelemente durchführbar ist. Hierbei ist vorgesehen, in einer Gießform ein erstes Maskenelement zu positionieren, in welchem ein zweites Maskenelement in der Art eines Schiebers verschiebbar geführt ist. Nach dem Gießen sind die Maskenelemente leicht entfernbar und somit wieder verwendbar.

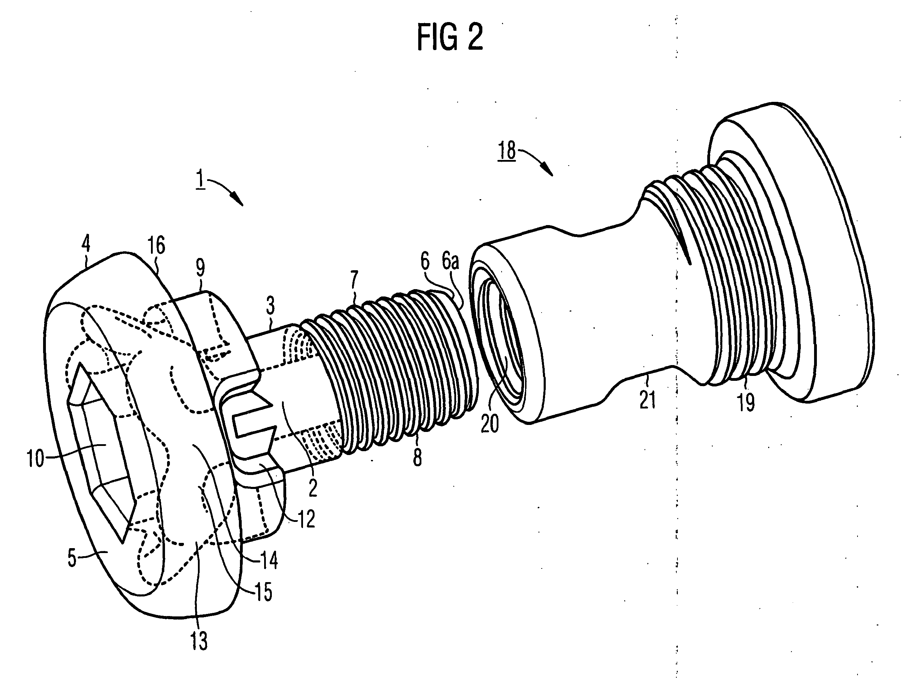

Die Schraube 1 ist, wie FIG 2 zeigt, mit einer Buchse 18 verschraubbar. Die Buchse 18 weist ein als Linksgewinde ausgebildetes Außengewinde 19 sowie ein ebenso wie das Gewinde 8 der Schraube 1 als Rechtsgewinde ausgebildetes Innengewinde 20 auf, in welches die Schraube 1 einschraubbar ist. Die Buchse 18 wird von außen in eine hier nicht dargestellte Wandung einer Brennkammer einer Gasturbine eingeschraubt. Mit der Schraube 1 wird eine Brennkammerinnenverkleidung an der Wandung der Brennkammer befestigt. Durch die Ausbildung des Außengewindes 19 der Buchse 18 als Linksgewinde und die Ausbildung des Innengewindes 20 der Buchse 18 sowie des korrespondierenden Gewindes 8 der Schraube 1 als Rechtsgewinde ist die Schraube 1 mit der Buchse 18 gegenverschraubt. Als Sicherung gegen Losdrehen weist das Innengewinde 20 einen ovalen Querschnittsbereich 21 auf. Die Schraube 1 ist durch Klemmung des Gewindes 8 im ovalen Querschnittsbereich 21 ohne weitere Sicherungselemente gesichert.

Zwischen der Brennkammerwand, in die die Buchse 18 eingeschraubt ist, und der Brennkammerinnenverkleidung, die von der Schraube 1 gehalten wird, ist ein Raum eingeschlossen, in dem Kühlluft F strömt, die anschließend als vorgewärmte Verbrennungsluft verwendet wird. Das aus der Schraube 1 ausströmende Kühlmittel F strömt in diesen Raum ein. Dieses Kühlmittel F, das sich in der Schraube 1 bereits erhitzt hat, trägt damit zur Erhöhung der Temperatur der der Gasturbine zuzuführenden Verbrennungsluft und damit zur Wirkungsgraderhöhung bei. Dagegen würde bei einer offenen Kühlung der Schraube 1, d.h. bei einer vollständigen axialen Strömung des Kühlmittels F durch die gesamte Schraube 1, das Kühlmittel F direkt in die Brennkammer gelangen, dort die Temperatur herabsetzen und damit den Wirkungsgrad mindern.

Die geschlossen innengekühlte Schraube 1 leistet somit einen Beitrag zur besonders effektiven Nutzung des Kühlmittels F und unterstützt durch die Heraufsetzung der Verbrennungslufttemperatur gleichzeitig die Erreichung eines hohen Wirkungsgrades der Gasturbine.

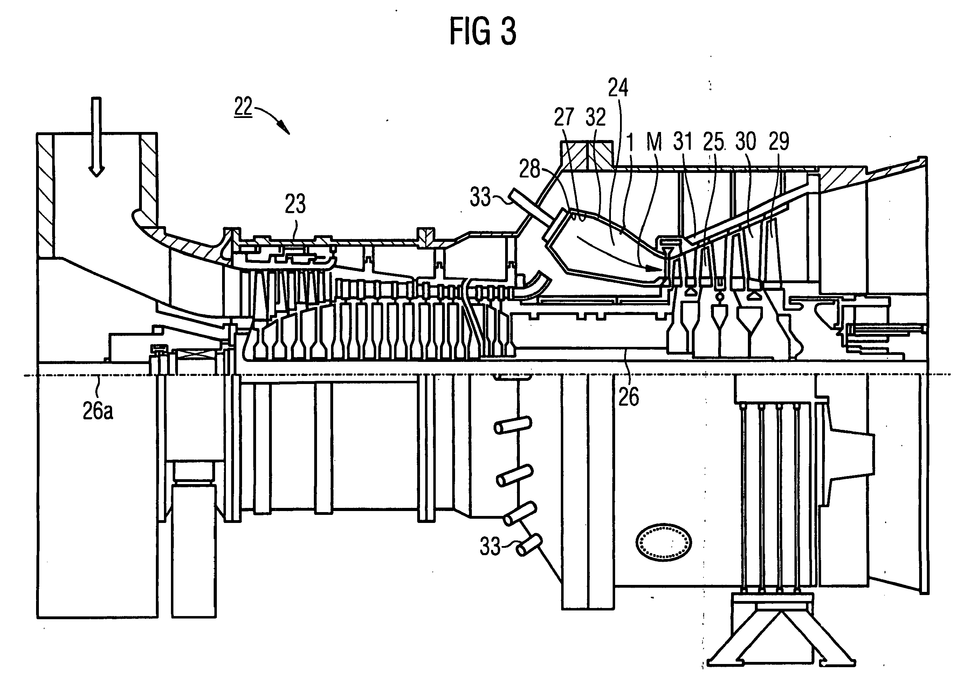

In FIG 3 ist schematisch im Querschnitt eine Gasturbine 22 dargestellt. Die Gasturbine 22 weist einen Verdichter 23 für Verbrennungsluft, eine Gasturbinenbrennkammer oder Brennkammer 24 sowie eine Turbine 25 zum Antrieb des Verdichters 23 und eines nicht dargestellten Generators oder einer Arbeitsmaschine auf. Dazu sind die Turbine 25 und der Verdichter 23 auf einer gemeinsamen, auch als Turbinenläufer bezeichneten Turbinenwelle 26 angeordnet, mit der auch der Generator bzw. die Arbeitsmaschine verbunden ist, und die um ihre Mittelachse 26a drehbar gelagert ist.

Die Brennkammer 24 ist mit einer Anzahl von Brennern 33 zur Verbrennung eines flüssigen oder gasförmigen Brennstoffs bestückt. Eine Brennkammerwand 27 ist mit einer Brennkammerinnenverkleidung 28 ausgekleidet.

Die Turbine 25 weist eine Anzahl von mit der Turbinenwelle 26 verbundenen, rotierbaren Laufschaufeln 29 auf. Die Laufschaufeln 29 sind kranzförmig an der Turbinenwelle 26 angeordnet und bilden somit eine Anzahl von Laufschaufelreihen. Weiterhin umfasst die Turbine 25 eine Anzahl von feststehenden Leitschaufeln 30, die ebenfalls kranzförmig unter der Bildung von Leitschaufelreihen an einem Innengehäuse 31 der Turbine 25 befestigt sind. Die Laufschaufeln 29 dienen damit zum Antrieb der Turbinenwelle 26 durch Impulsübertrag vom die Turbine 25 durchströmenden Arbeitsmedium M. Die Leitschaufeln 30 dienen hingegen zur Strömungsführung des Arbeitsmediums M zwischen jeweils zwei in Strömungsrichtung des Arbeitsmediums M gesehen aufeinanderfolgendenden Laufschaufelreihen oder Laufschaufelkränzen. Ein aufeinanderfolgendes Paar aus einem Kranz von Leitschaufeln 30 oder einer Leitschaufelreihe und aus einem Kranz von Laufschaufeln 29 oder einer Laufschaufelreihe wird dabei als Turbinenstufe bezeichnet.

Um einen hohen Wirkungsgrad der Gasturbine 22 zu ermöglichen wird die Gasturbine 22 mit einer hohen Temperatur des Arbeitsmediums M betrieben. Das Arbeitsmedium M tritt aus der Brennkammer 24 mit einer Temperatur von ca. 1200 bis 1300°C aus. Die der Verbrennung zugeführte komprimierte Verbrennungsluft wird in einem Mantelraum 32, der zwischen der Innenwand 27 der Brennkammer 24 und der Brennkammerinnenverkleidung 28 gebildet ist, vor dem Eintritt in den Brenner 33 vorgewärmt. Dadurch wird gleichzeitig die Innenwand 27 der Brennkammer 24 gekühlt. Die Schraube 1, die die Brennkammerinnenverkleidung 28 an der Innenwand 27 der Brennkammer 24 hält, ist unter diesen Betriebsbedingungen hohen mechanischen und thermischen Belastungen ausgesetzt. Der Kopf 4 der Schraube 1 ragt in die Brennkammer 24 hinein. Durch die hocheffiziente Kühlung der Schraube 1, insbesondere des Kopfes 4, ist eine hohe Festigkeit der Schraube 1 mit ausreichenden Sicherheitsreserven unter allen Betriebsbedingungen gegeben.

## Patentansprüche

1. Schraube (1) mit einem Kopf (4), einem Schaft (3) und einem eine Einströmöffnung (6a) sowie eine Ausströmöffnung (12) aufweisenden Kühlmittelkanal (2), welcher nicht den gesamten Kopf (4) und Schaft (3) axial durchdringt.

2. Schraube (1) nach Anspruch 1, **dadurch gekennzeichnet, dass** die Ausströmöffnung (12) am Schaftumfang (7) angeordnet ist.

3. Schraube (1) nach Anspruch 1 oder 2, **dadurch gekennzeichnet, dass** die Einströmöffnung (6a) am Schaftende (6) angeordnet ist.

4. Schraube (1) nach einem der Ansprüche 1 bis 3, **dadurch gekennzeichnet, dass** die Ausströmöffnung (12) am Kopf (4) angeordnet ist.

5. Schraube (1) nach Anspruch 3 oder 4, **dadurch gekennzeichnet, dass** mehrere Ausströmöffnungen (12) zumindest annähernd rotationssymmetrisch um die Achse (A) des Schaftes (3) angeordnet sind.

6. Schraube (1) nach einem der Ansprüche 1 bis 5, **dadurch gekennzeichnet, dass** die Kühlmitteleinströmrichtung (R1) der Kühlmittelausströmrichtung (R2) entgegegerichtet ist.

7. Schraube (1) nach einem der Ansprüche 1 bis 6, **gekennzeichnet durch** einen den Schaft (3) in Richtung des Kopfes (4) begrenzenden Schraubenkragen (9).

8. Schraube (1) nach Anspruch 7, **dadurch gekennzeichnet, dass** die Ausströmöffnung (12) am Schraubenkragen (9) angeordnet ist.

9. Schraube (1) nach einem der Ansprüche 1 bis 8, **gekennzeichnet durch** einen im Kopf (4) angeordneten Umlenkbereich (13) des Kühlmittelkanals (2).

10. Schraube (1) nach Anspruch 9 , **dadurch gekennzeichnet, dass** sich der Kühlmittelkanal (2) im Umlenkbereich (13) aufspaltet.

11. Gasturbinenbrennkammer (24) mit einer Brennkammerinnenverkleidung (28), die an einer Brennkammerwand (27) mit einer Schraube (1) nach einem der Ansprüche 1 bis 10 befestigt ist.

12. Gasturbinenbrennkammer nach Anspruch 11, **dadurch gekennzeichnet, dass** die Ausströmöffnung (12) der Schraube (1) in einem Mantelraum (32) zwischen der Brennkammerinnenverkleidung (28) und der Brennkammerwand (27) angeordnet ist.

## Claims

1. Screw (1) having a head (4), a shank (3) and a coolant passage (2) which has an inflow opening (6a) and an outflow opening (12) and which does not pass axially through the entire head (4) and shank (3).

2. Screw (1) according to claim 1, **characterized in that** the outflow opening (12) is arranged on the shank circumference (7).

3. Screw (1) according to claim 1 or 2, **characterized in that** the inflow opening (6a) is arranged on the shank end (6).

4. Screw (1) according to one of claims 1 to 3, **characterized in that** the outflow opening (12) is arranged on the head (4).

5. Screw (1) according to claim 3 or 4, **characterized in that** a plurality of outflow openings (12) are arranged at least approximately in a rotationally symmetrical manner about the axis (A) of the shank (3).

6. Screw (1) according to one of claims 1 to 5, **characterized in that** the coolant inflow direction (R1) is opposed to the coolant outflow direction (R2).

7. Screw (1) according to one of claims 1 to 6, **characterized by** a screw collar (9) defining the shank (3) in the direction of the head (4).

8. Screw (1) according to claim 7, **characterized in that** the outflow opening (12) is arranged on the screw collar (9).

9. Screw (1) according to one of claims 1 to 8, **characterized by** a deflecting region (13), arranged in the head (4), of the coolant passage (2).

10. Screw (1) according to claim 9, **characterized in that** the coolant passage (2) splits up in the deflecting region (13).

11. Gas-turbine combustion chamber (24) having a combustion-chamber inner lining (28) which is fastened to a combustion-chamber wall (27) with a screw (1) according to one of claims 1 to 10.

12. Gas-turbine combustion chamber according to claim 11, **characterized in that** the outflow opening (12) of the screw (1) is arranged in a shell space (32) between the combustion-chamber inner lining (28) and the combustion-chamber wall (27)

## Revendications

1. Vis (1) comprenant une tête (4), un fût (3) et un conduit à réfrigérant (2) comportant un orifice d'entrée (6a) et un orifice de sortie (12) qui ne traverse pas l'ensemble de la tête (4) et du fût (3) en direction axiale.

2. Vis (1) selon la revendication 1, **caractérisée en ce que** l'orifice de sortie (12) est disposé sur la circonférence du fût (7).

3. Vis (1) selon la revendication 1, **caractérisée en ce que** l'orifice d'entrée (6a) est disposé sur l'extrémité du fût (6).

4. Vis (1) selon l'une quelconque des revendications 1 à 3, **caractérisée en ce que** l'orifice de sortie (12) est disposé sur la tête (4).

5. Vis (1) selon la revendication 3 ou 4, **caractérisée en ce que** plusieurs orifices de sortie (12) sont disposés au moins de façon approximativement symétrique en rotation autour de l'axe (A) du fût (3).

6. Vis (1) selon l'une quelconque des revendications 1 à 5, **caractérisée en ce que** la direction d'entrée du réfrigérant (R1) est opposée à la direction de sortie du réfrigérant (R2).

7. Vis (1) selon l'une quelconque des revendications 1 à 6, **caractérisée par** une collerette de vis (9) délimitant le fût(3) en direction de la tête (4) .

8. Vis (1) selon la revendication 7, **caractérisée en ce que** l'orifice de sortie (12) est disposé sur la collerette de vis (9).

9. Vis (1) selon l'une quelconque des revendications 1 à 8, **caractérisée par** une zone de renvoi (13) du conduit à réfrigérant (2) disposée dans la tête (4).

10. Vis (1) selon la revendication 9, **caractérisée en ce que** le conduit à réfrigérant (2) se sépare dans la zone de renvoi (13).

11. Chambre de combustion d'une turbine à gaz (24) ayant un revêtement intérieur de chambre de combustion (28), qui est fixé sur une paroi de chambre de combustion (27) par une vis (1) selon l'une quelconque des revendications 1 à 10.

12. Chambre de combustion d'une turbine à gaz selon la revendication 11, **caractérisée en ce que** l'orifice de sortie (12) de la vis (1) est disposé dans un espace (32) latéral entre le revêtement de chambre de combustion (28) et la paroi de chambre de combustion (27).
